# EUROPEAN PATENT SPECIFICATION

(11) **EP 2 202 717 B1**
(45) Date of publication and mention of the grant of the patent: **25.12.2013**
(21) Application number: 08834932.9
(22) Date of filing: 02.10.2008
(51) Int. Cl.: G09G 3/36, G02F 1/133, G09G 3/20, G09G 3/34

(54) **IMAGE DISPLAY**
BILDANZEIGE
AFFICHEUR D'IMAGE

(30) Priority: 05.10.2007 JP 2007262025
(43) Date of publication of application: 30.06.2010
(73) Proprietor: Sharp Kabushiki Kaisha, Osaka-shi, Osaka 545-8522 (JP)
(72) Inventor: KOYAMA, Daisuke, Osaka-shi, Osaka 545-8522 (JP); MAMBA, Osamu, Osaka-shi, Osaka 545-8522 (JP); OTSUKA, Koji, Osaka-shi, Osaka 545-8522 (JP)
(74) Representative: Müller - Hoffmann & Partner
(86) International application number: PCT/JP2008/067958
(87) International publication number: WO 2009/044828

(56) References cited:
- WO-A2-2007/017795
- JP-A- 8 305 321
- JP-A- 2005 316 332
- JP-A- 2006 349 745
- JP-A- 2007 003 805
- JP-A- 2007 086 390
- JP-A- 2007 164 202
- US-A1- 2003 146 919
- PIERRE DE GREEF AND HENDRIEK GROOT HULZE NXP SEMICONDUCTORS (FOUNDED BY PHILIPS) ET AL: "39.1: Adaptive Dimming and Boosting Backlight for LCD-TV Systems", SID 2007, 2007 SID INTERNATIONAL SYMPOSIUM, SOCIETY FOR INFORMATION DISPLAY, LOS ANGELES, USA, vol. XXXVIII, 20 May 2007 (2007-05-20), pages 1332-1335, XP007013259, ISSN: 0007-966X
- SID_JOURNALS, 1475 S. BASCOM AVE., STE. 114, CAMPBELL, CA 95008-4006 USA, XP040426347,

## Description

### Technical Field

The present invention relates to an image display and a method of controlling the same.

### Background Art

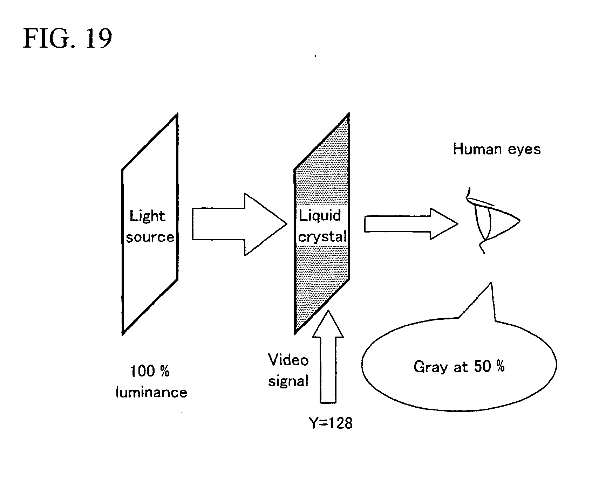

In recent years, importance of image displays, on which images including moving pictures are displayed, has been increasing in television units, personal computers, mobile terminals and the like. In particular, non-self-luminous image displays, such as liquid crystal displays each utilizing a light source and a liquid crystal panel, are commonly used at present. Fig. 19 is a view showing the most general liquid crystal display technique. As shown in Fig. 19, when gray at 50 %, for example, is displayed, a luminance value in a video signal is decreased, for example, from Y = 255 to Y = 128 while maintaining 100 % of light amount generated by the light source, whereby human eyes can perceive that gray at 50% is displayed.

In such a general manner, however, power consumption reduction of the image display as a whole is difficult because, even when gray is displayed, power consumption is not saved in the high-power consuming light source. Thus, a technique for controlling a light source plays an important role in power consumption reduction in an image display.

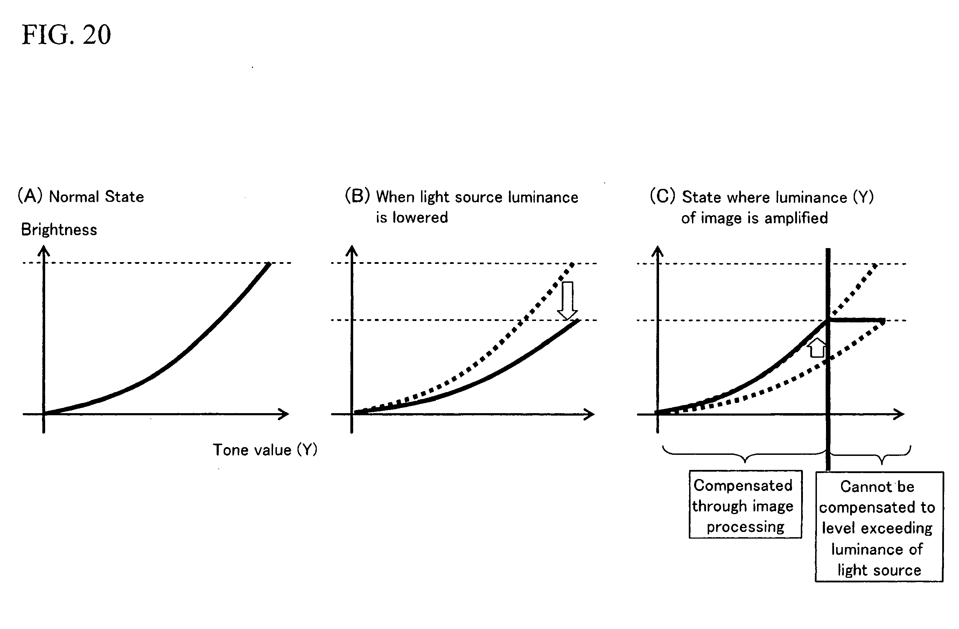

For example, a technique disclosed in Patent Document 1 described below makes use of the fact that the darker a video image is, the more hardly the apparent brightness of the video image is lost even when the luminance of the light source is lowered. This technique includes detecting brightness of a video image on the basis of such measurements as a maximum tone and an average tone in input signals, and dynamically determining a luminance of a light source. Fig. 20 includes diagrams showing an outline of the technique disclosed in Patent Document 1. In a normal state shown in part (A) of Fig. 20, brightness and tone value (Y) of a luminance has a relationship in which the higher the luminance, the larger the brightness. On the other hand, as shown in part (B) of Fig. 20, when the light source luminance is lowered, a slope of brightness dependence on the tone value becomes less steep as indicated by an arrow. Therefore, as shown in part (C) of Fig. 20, a luminance of a video signal is amplified, whereby the brightness is restored to the original level though image processing. Thereby, the original brightness can be attained through the image processing even though the luminance of the light source is lowered.

However, even if attainment of the original brightness is attempted through the image processing, the brightness cannot be compensated to a level exceeding the luminance of the light source as shown in part (C) of Fig. 20. Therefore, in order to preserve appearance of a video image, it is essential to control the light source so as to change the luminance of the light source as needed in accordance with brightness of the video image (so that the brightness of the light source may become lower as the video image becomes darker).
Patent Document 1: Japanese Patent Application Publication No. 2006-308632

### Disclosure of the Invention

US 2003/0146919 discloses a video display apparatus and video display method in which the brightness of a light source is controlled according to a certain method. Pierre de Greef and Hendriek Groot Hulze et al "39.1 Adaptive Dimming and Boosting Backlight for LCD-TV Systems", SID 2007, 2007 SID International Symposium, Society for Information Display, Los Angeles, USA, vol. XXXVIII, 20. May 2007 (2007-05-20), pages 1332-1335 discloses a special method for controlling the backlight illumination for LCD-TV systems. Moreover, W02007/017795 discloses a device comprising a liquid crystal display and a backlight comprising organic light emitting diodes.

P. de Greef et al. "Adaptive scanning, 1-D dimming, and boosting backlight for LCD-TV systems" Journal of SID 14/12, 2006, page 1103, relates to an adaptive dimming technology which can be applied to dim the backlight, while maintaining image quality and saving power.

### Problems to be Solved by the Invention

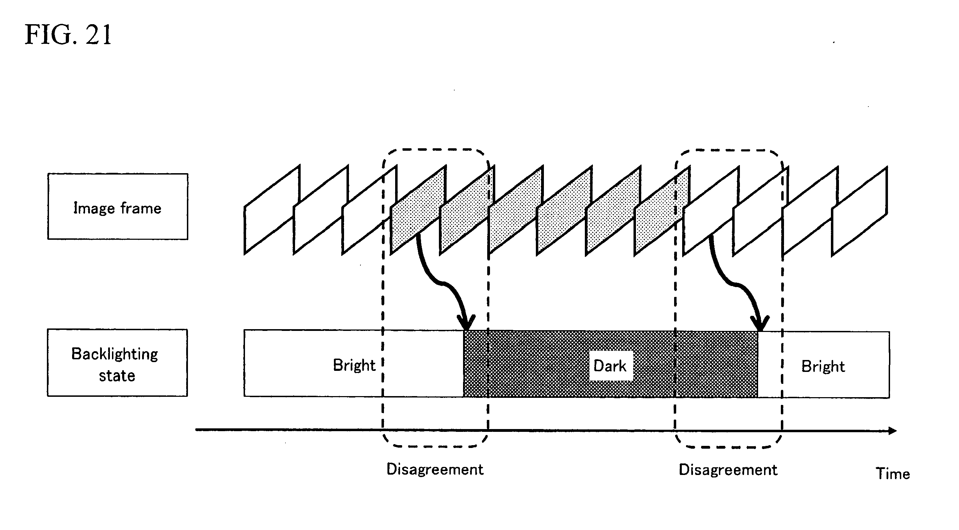

However, the following problem exists in the above described light source control. Since the light source is controlled after brightness of a video signal is analyzed, there occurs a period when the light source luminance and a video signal disagree with each other. This disagreement is perceived by human eyes as flicker, and sometimes brings visual discomfort (refer to Fig. 21).

In response to this problem, there is another technique (for example, Japanese Patent Application Publication No. 2000-330505) for making flicker less conspicuous by slowing down a speed of luminance change except for when scene change is occurring. However, this technology has a problem that an electronic power saving effect is extremely small when scene change is determined as not occurring.

Alternatively, as in the case of Patent Document 1, there is another method by which, with a frame memory being provided, output of a video image signal is delayed and synchronized with the light source control. However, it is difficult to apply this method particularly to mobile terminals that are limited in terms of circuit size and cost.

An object of the present invention is to provide a technique for performing display without visual discomfort while achieving power consumption reduction in displaying video images.

### Means for Solving the Problems

The above objects are achieved by the claimed matter according to the independent claims.

According to one aspect of the present invention, provided is an image display including a display panel and a light source that illuminates the display panel, the image display characterized by comprising a control section that, when performing control in accordance with an input signal to attain targeted brightness of display, performs control to change an amount of light generated by the light source (hereinafter, referred to as "light source luminance" in claims), and also to set a compensation parameter used for changing a luminance value of a signal, which is to be outputted to the display panel, so that the change in the amount of light is compensated, the image display characterized in that the control section performs the control with a changing speed of the luminance value set variable.

In addition, provided is an image display including a display panel and a light source that illuminates the display panel, the image display characterized by comprising a control section that, when performing control in accordance with an input signal to attain targeted brightness of display, performs control to change an amount of light generated by the light source (hereinafter, referred to as "light source luminance" in claims), and also to set a compensation parameter used for changing a luminance value of a signal, which is to be outputted to the display panel, so that the change in the amount of light is compensated, the image display characterized in that the control section performs control to change the luminance value to a target value with a changing speed of the luminance value set to a constant speed. The control section sets the changing speed to a limit speed causing no visual discomfort.

Provided is an image display including a display panel and a light source that illuminates the display panel, the image display characterized by comprising a control section that, when performing control in accordance with an input signal to attain targeted brightness of display, performs control to change an amount of light generated by the light source (hereinafter, referred to as "light source luminance" in claims), and also to set a compensation parameter used for changing the luminance value of a signal, which is to be outputted to the display panel, so that the change in the amount of light is compensated, the image display characterized in that the control section performs control to set the changing speed of the luminance value of the light source to be slower in upward change where the luminance is increased, and to set the speed to be faster in downward change where the luminance is lowered.

Provided is the image display characterized in that the control section performs control by selecting the slower one of the limit speed and a speed determined depending on a difference between a target value and a current value of the light source luminance (hereinafter, referred to as "base following speed") in upward change where the luminance is increased, and selecting the faster one thereof in downward change where the luminance is lowered. It is preferable that a value of the base following speed is updated so as to smoothly follow. It is further preferable that the control section switches a value of the limit speed from one to another based on a current luminance value. It is also preferable that the control section performs control by selecting the limit speed if a change amount between the target value and the current value is small, and by selecting one of the base following speed and the limit speeds if the change amount between the target value and the current value is large. When the change is not so large, a power saving effect is enhanced as compared to the general method (using base following speeds only). It is preferable that the light source be an OLED (Organic Light Emitting Diode) device. It is preferable that the light source should be a light source in which an amount of light of each of plural areas in a display region is controllable independently of the other areas, and that the control section should perform control to change the luminance value for each of the plural areas independently of the other areas in a signal outputted to the display panel. A power saving effect is enhanced by varying a limit speed in accordance with an area and a position of each of the light sources. If the area is small or is located at the end of a screen, the control can be performed at a faster speed (in downward change) or at a slower speed (in upward change).

It is preferable that the light source has a plurality of light sources for each of color components, and the control section performs control to change the luminance value for each of the color components in accordance with a degree of contribution of the color component to brightness. It is preferable that, for a color whose contribution to brightness is smaller, the control is performed at a faster speed in downward change and at a slower speed in upward change. It is further preferable that control is performed such that a luminance value for each of the plurality of areas in a signal to be outputted to the display panel is changed independently of the other areas. For any of the plurality of areas that is less conspicuous, the control may be performed at a faster speed in downward change and at a slower speed in upward change. If the area is small or is located at the end of a screen, a power saving effect is enhanced by having various limit speeds in accordance with areas and positions in the light source.

The present invention may be a mobile terminal comprising the image display described above, characterized by comprising a switch used for causing the control unit to perform the control with the changing speed of the luminance value set variable. Moreover, provided is a mobile terminal characterized by comprising the image display described above, and having a function of switching the limit speed from one to another. It is preferable that a mobile terminal comprises the image display described above, a communication section and a video image receiving section, and that the control section performs the control with the changing speed of the luminance value set constant for a video image acquired from the communication section, and performs control with the changing speed of the luminance value set variable for a video image acquired from the video image receiving section. It is preferable that, upon detection of operation of the communication section, the control performed with the changing speed of the luminance value set variable is halted.

According to another aspect of the present invention, provided is a display control method in an image display including a display panel and a light source that illuminates the display panel, the display control method for, when performing control in accordance with an input signal to attain targeted brightness of display, performing control to change an amount of light generated by the light source (hereinafter, referred to as "light source luminance" in claims), and also to set a compensation parameter used for changing a luminance value of a signal, which is to be outputted to the display panel, so that the change in the amount of light is compensated, the display control method characterized by comprising the step of performing control to change the luminance value to a target value with a changing speed of the luminance value being set to a constant speed.

Additionally, the present invention may be a program used for causing a computer to execute the above steps, and may be a recording medium in which the program is stored. The program may be one acquired through a transmission medium.

### Effects of the Invention

According to the present invention, while power consumption reduction in displaying images can be achieved, display without causing visual discomfort can be performed.

### Brief Description of the Drawings

[Fig. 1] Fig. 1 is a view showing a principle on which the power saving control according to one embodiment of the present invention is based.
[Fig. 2] Fig. 2 includes diagrams each showing temporal change in brightness of an image and temporal change in luminance of a light source. The diagrams are conceptual illustrations each provided for explaining a luminance change speed defined by an amount of luminance change per unit time in a case where luminance of the light source is changed from a time point when a control signal for darkening brightness of the image is detected.
[Fig. 3] Fig. 3 is a diagram showing one configuration example of an image display according to this embodiment.
[Fig. 4] Fig. 4 is a diagram showing one example of a method for determining a target of a light source luminance.
[Fig. 5] Fig. 5 includes flowchart diagrams showing a flow of image displaying processing according to this embodiment.
[Fig. 6] Fig. 6 includes diagrams each showing workings when an image is darkened.
[Fig. 7] Fig. 7 includes diagrams each showing workings when an image is brightened.
[Fig. 8] Fig. 8 is a flowchart diagram showing a flow of update processing according to a second embodiment of the present invention, and is a diagram corresponding to part (B) of Fig. 5.
[Fig. 9] Fig. 9 is a diagram following Fig. 8.
[Fig. 10] Fig. 10 includes diagrams each showing workings caused by an image displaying technique according to this embodiment.
[Fig. 11] Fig. 11 is a diagram showing an example of a pattern according to a way how to consider base following speeds, and is a diagram showing the way with respect to a case of downward change, the way being different from that in the above, the example being a third embodiment of the present invention.
[Fig. 12] Fig. 12 is a diagram showing a case of upward change where a luminance of a light source is increased.
[Fig. 13] Fig. 13 is a flowchart diagram showing a flow of image displaying processing according to this embodiment.
[Fig. 14] Fig. 14 is a diagram showing an first example of the present invention where the above image displaying technique is applied to a mobile phone, and is a functional block diagram showing one configuration example of a mobile phone having a One-Seg audio-visual function.
[Fig. 15] Fig. 15 is a view showing a second example of the present invention utilizing the mobile phone shown in Fig. 14.
[Fig. 16] Fig. 16 is a view showing a third example of the present invention where this image displaying technique is applied to a display unit using OLED as a light source.
[Fig. 17] Fig. 17 is a view showing a fourth example where an image displaying controlling technique according to this embodiment is utilized.
[Fig. 18] Fig. 18 is a view showing an image displaying technique according to a fifth example of the present invention.
[Fig. 19] Fig. 19 is a view showing a general liquid crystal displaying technique.
[Fig. 20] Fig. 20 is a diagram showing an outline of a technique disclosed in Patent Document 1.
[Fig. 21] Fig. 21 is a conceptual illustration showing how a period where a luminance of a light source and a video signal disagree with each other occurs in the general liquid crystal displaying technique.

### Description of Symbols

- A: image display
- 1: display unit
- 3: light source
- 5: light source control section
- 7: video signal processing section
- 11: control section
- 15: video-image analyzing block
- 17: target value setting block
- 21: controlled-amount determining block

### Best Modes for Carrying Out the Invention

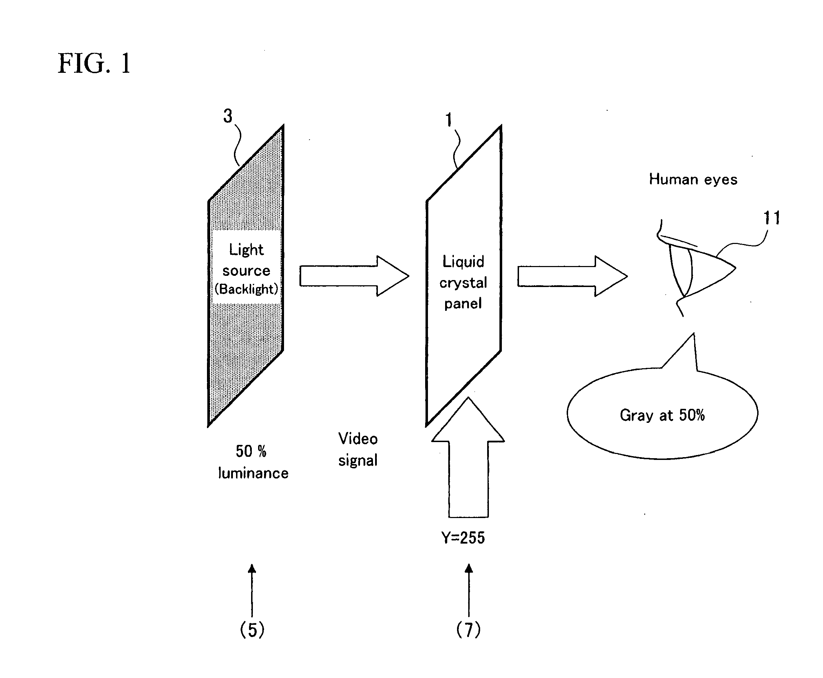

Before describing an embodiment of the present invention, features of an image displaying technique according to the present invention will be described with reference to the drawings. Fig. 1 is a view showing a principle on which the power saving control according to this embodiment of the present invention is based. As shown in Fig. 1, while light emission 5 of a light source (backlight) 3 of a liquid crystal panel 1 is set to 50 %, a luminance Y(7) of a video signal inputted to the liquid crystal panel 1 is almost doubled to Y = 255. Thereby, human eyes 11 can perceive that gray at 50 % is displayed. Thus, the luminance of the light source and compensation through signal processing are controlled so as to suit a content of a video image, whereby power consumption is reduced with apparent brightness being maintained.

Note that, for the purpose of simplifying the description, the following description in this embodiment will be described on the premises that there is a linear correspondence between a luminance value of a video signal and a luminance displayed by the display panel, and that the compensation can be made simply by amplifying the luminance value of the video signal. Also in a case having a nonlinear correspondence (a so-called gamma characteristic) and requiring more complicated processing for the compensation, control of a light source luminance can be processed in the same manner regardless of compensation method. In other words, it goes without saying that a light source controlling method according to the invention disclosed in the claims of the present application can be employed no matter what form a method for the compensation assumes.

Here, the inventor has come up with an idea that, if the control is performed at a faster speed in lowering the luminance, and at slower speed in increasing the luminance, a power saving effect can be enhanced further. As a support for this idea, the Weber-Hefner Law is known. The Weber-Hefner Law can be expressed as ΔS = kS. This expression means that "a minimum amount ΔS of human-perceivable change in a stimulus is proportional to an original size S of the stimulus."

For example, while "when having luggage that weighs 10 kg, a person does not sense weight reduction even with the burden being reduced by 100 g," "when having luggage that weighs 500 g, a person senses weight increase with the burden being increased by 100 g". If this is applied to a case of a visual sense, the following principle can be said: while "when an original view is bright, it is difficult for a person to sense darkening thereof even with the view being darkened at a relatively fast speed", "when an original view is dark, a person senses brightening thereof even with the view being brightened at a relatively slow speed." The present invention utilizes this principle.

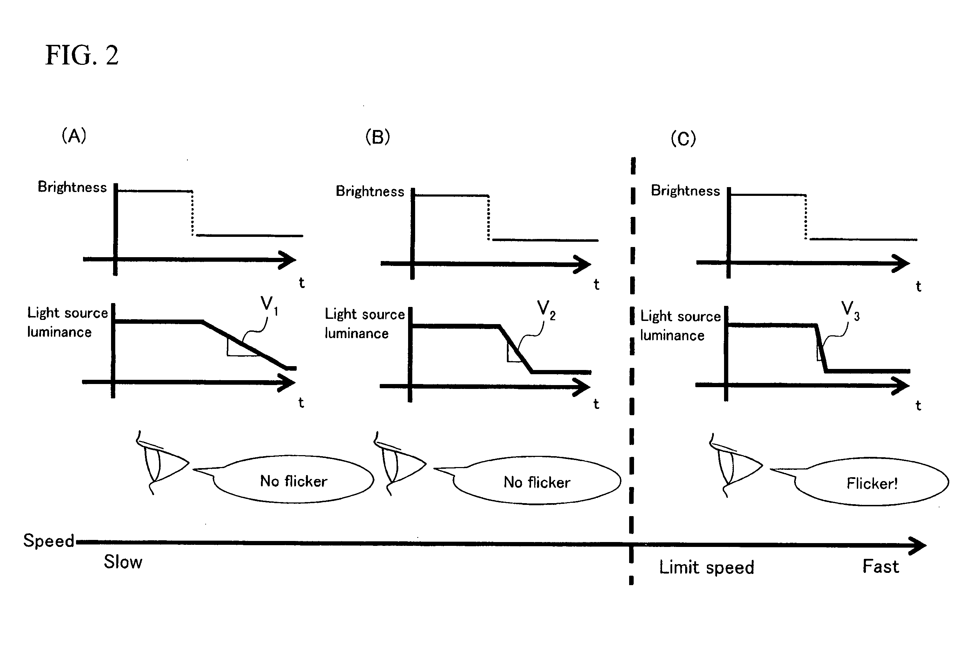

Fig. 2 includes diagrams each showing temporal change in brightness of an image and temporal change in luminance of a light source. The diagrams are conceptual illustrations each provided for explaining a luminance change speed defined by an amount of luminance change per unit time in a case where the luminance of the light source is changed from a time point when a control signal for darkening brightness of the image is detected. In Fig. 2, the luminance of the light source is decreased slowly in the case of (A), and a decreasing speed of the light source luminance is v1. When the luminance is decreased faster, the decreasing speed of the light source luminance becomes v2 (> v1). However, there is still no flicker occurring at this speed. When the decreasing speed of the luminance of the light source is set further faster, flicker comes to be sensed, for example, at the decreasing speed of v3 (> v2). The inventor thought that the control should be performed so that a changing speed (a limit speed) that is a limit of speeds without causing visual discomfort is calculated, and the luminance may be decreased to a target luminance at the thus calculated limit speed.

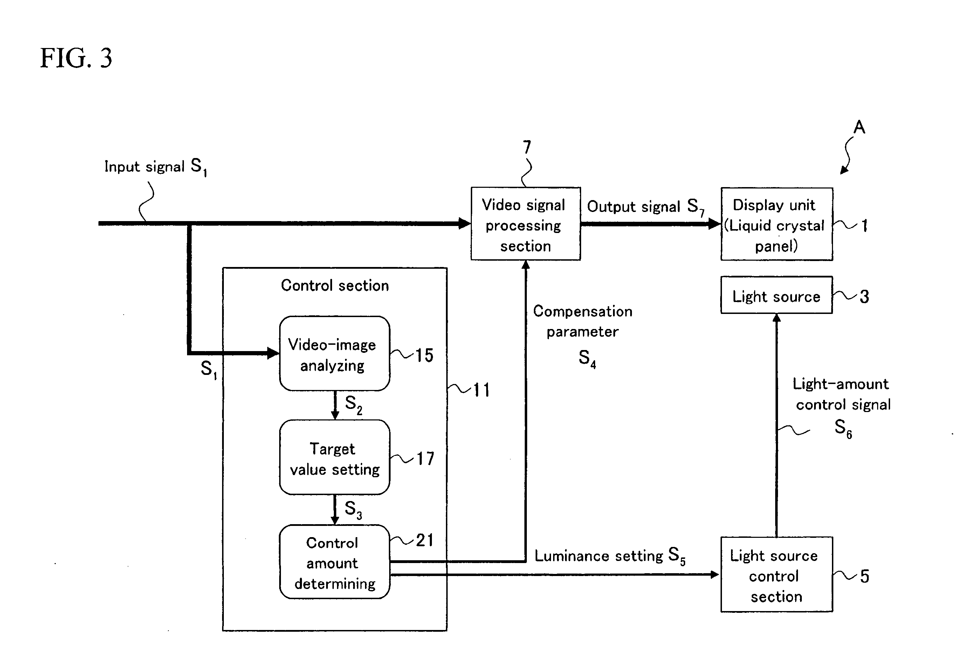

An image displaying technique according to each embodiment of the present invention will be described below with reference to the drawings. Fig. 3 is a diagram showing one configuration example of an image display according to this embodiment. As shown in Fig. 3, an image display A according to this embodiment includes: a display unit 1 such as a liquid crystal panel; a light source 3 such as a backlight; a light source control section 5; a video signal processing section 7 that outputs a signal used for controlling the display unit in accordance with an input signal S1; and a control section 11 that performs the whole control including light source control and video image control. The control section 11 includes: a video-image analyzing block 15 that analyzes a video image in accordance with the input signal S1; a target value setting block 17 that sets a target value of an amount of light generated by the light source upon receiving an analysis result S2; and a controlled-amount determining block 21 that, upon receiving a target value S3, determines a speed at which the light source is controlled, and that outputs a compensation parameter S4 to the video signal processing section 7 while notifying the light source control section of a set luminance S5. The light source control section 5 outputs a light amount control signal S6 to the light source upon receiving the luminance set value S5. On the other hand, the video signal processing section 7 outputs an output signal S7 to the display unit 1 in accordance with the input signal S1 and the compensation parameter S4. Here, processing up to and including the speed control is performed by the controlled-amount determining block 21, and the light source control section 5 converts the thus given luminance setting S5 into the pulse signal S6 having a duty ratio corresponding thereto. The above components and terms will be described further in detail below. The input signal S1 and output signal S7 are assumed to be YUV signals, and are processed particularly based on luminance components Y thereof. In a case of a signal in another signal format such as RGB, the signal can be processed in the same manner by providing conversion processing sections before and after the processing. The video signal processing section 7 performs correction processing by making a calculation of, for example, an output Y' = aY (where a is a compensation parameter). The display unit 1 is a non-self-luminous display unit, and is mainly assumed to be an LCD. The light source is a so-called a backlight device irrespectively of a type thereof, which may be a cold-cathode tube type, an LED type, an OLED type or the like. The control section 11 analyzes brightness of a video image by using later described histograms and the like, then sets a target value of the luminance and a target value of an amount of the compensation in accordance with a result of the analysis, and then determines a controlled amount of the luminance so that a change of the luminance per unit time may be, for example, the limit speed. The light source control section 5 can set the light source luminance to a desired value by using a general method such as PWM.

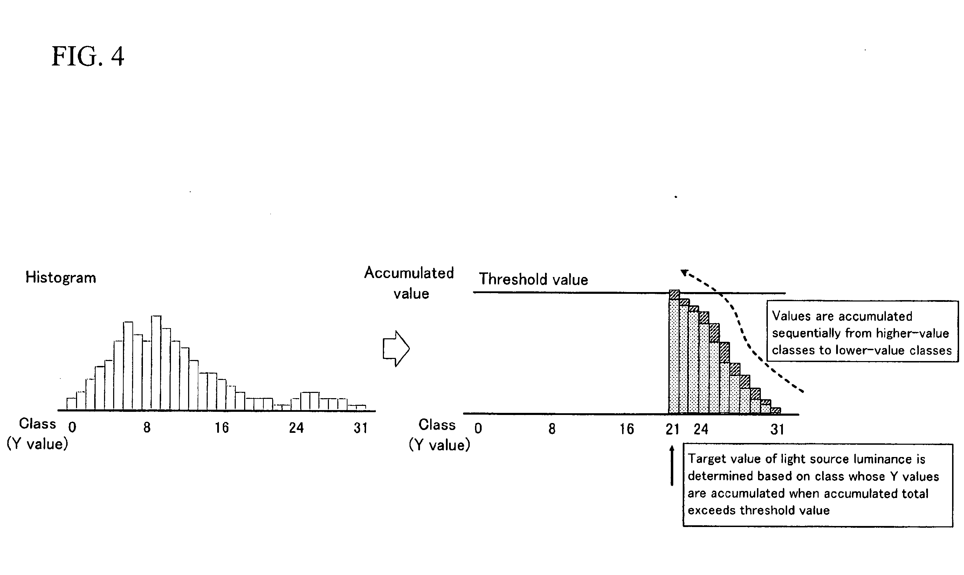

Next, a method for determining a target of the light source luminance will be described. Fig. 4 is a diagram showing one example of a method for determining a target of the light source luminance. The left illustration in Fig. 4 is a graph showing one example of a histogram regarding classes of the luminance (Y) in an image. Note that each of classes is a group including Y values falling in a given range. For example, Y values not less than 0 and less than 8 are grouped into the class 0, Y values not less than 8 and less than 16 are grouped into the class 1, and so on. Here, as shown in the right illustration, Y values in each class are accumulated sequentially from the highest class to lower classes in the histogram, and a target light source luminance can be determined based on a class whose Y values are accumulated when the accumulated total exceeds a threshold value.

**[Table 1]**

| Class | Duty ratio of the PWM | Light source luminance [cd/m²] |
|---|---|---|
| 0 | 57.8% | 173.5 |
| 1 | 58.2% | 174.5 |
| 2 | 58.8% | 176.3 |
| 3 | 59.4% | 178.2 |
| 4 | 60.0% | 180.0 |
| 27 | 74.5% | 228.3 |
| 28 | 75.1% | 232.2 |
| 29 | 75.7% | 236.1 |
| 30 | 76.3% | 240.0 |
| 31 | 77.2% | 244.4 |

Table 1 is a table showing a relationship among class, duty ratio of the PWM, and light source luminance. The reference table such as one shown here is previously prepared, and is stored in a non-volatile memory or the like so that a CPU can refer thereto. With such a table, a target value for the light source luminance can be determined in a simple manner by obtaining a histogram.

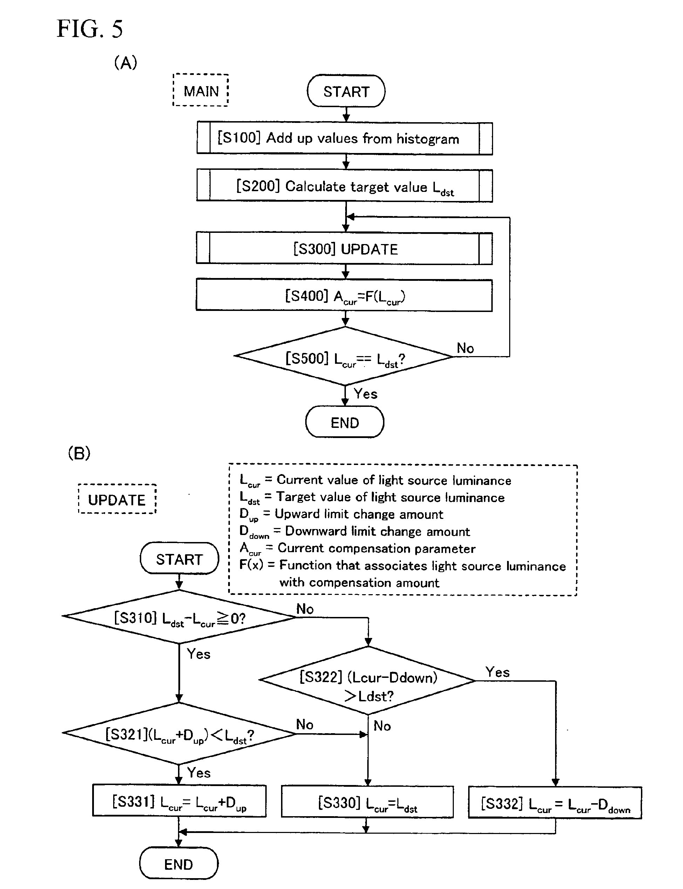

An image displaying technique according to an illustrative example illustrating the present invention will be described below with reference to the drawings. Fig. 5 includes flowchart diagrams showing a flow of image displaying processing according to this example. Part (A) of Fig. 5 is a diagram showing a flow of main processing. Part (B) of Fig. 5 is a diagram showing a flow of update processing. As shown in part (A) of Fig. 5, first of all, the control section starts the processing (START), and sums up values from a histogram in step S100. In step S200, the control section calculates a target value Ldst of the light source luminance. In step S300, the control section sets a next control value by performing the later described update processing. Subsequently, in step S400, the control section finds a compensation parameter on the basis of a function F(Lcur) that associates light source luminance with a current compensation parameter Acur. The control section continuously performs calculations from step S300 to step S400 until Lcur equals Ldst, that is, until the target value is reached. Then, as shown in Fig. 500, the control section ends the calculations when Lcur equals Ldst, that is, when the target value is reached (END).

In the update processing in step S300, as shown in part (B) of Fig. 5, the control section starts the processing (START), and determines in step S310 whether the luminance is increasing or decreasing on the basis of whether or not (Ldst - Lcur) is not less than 0. In the case of Yes, a change of the luminance is upward, and the control section therefore proceeds to step S321 and determines whether or not (Lcur + Dup) is smaller than Ldst. Here, Dup denotes an upward limit change amount. Dup is determined through Dup = V12·Tf on the basis of an upward limit speed V12 and a processing cycle Tf for performing step S300. The processing cycle Tf is normally equal to the integral multiple of a one-frame period. On the other hand, in the case of No, the control section proceeds to step S322, and determines whether or not the luminance has reached a target by determining whether or not (Lcur + Dup) is larger than Ldst.

In the case of Yes in step S321, the control section determines that the target has not been reached, and then proceeds to step S331, whereas, in the case of No in step S321, the control section determines that the target has been reached, and then proceeds to step S330. In step S331, the control section adds a certain value to the current value by calculating Lcur = Lcur + Dup and thereby finds Lcur to which the current value should be updated. In step S330, the control section updates Lcur by setting Lcur = Ldst. In the case of Yes in step S322, the target value has not been reached, so the control section proceeds to step S332, and finds Lcur to which the current value should be updated by calculating Lcur = Lcur - Ddown. In the case of No, the target value has been reached, so the control section proceeds to step S330, and updates Lcur by setting Lcur = Ldst.

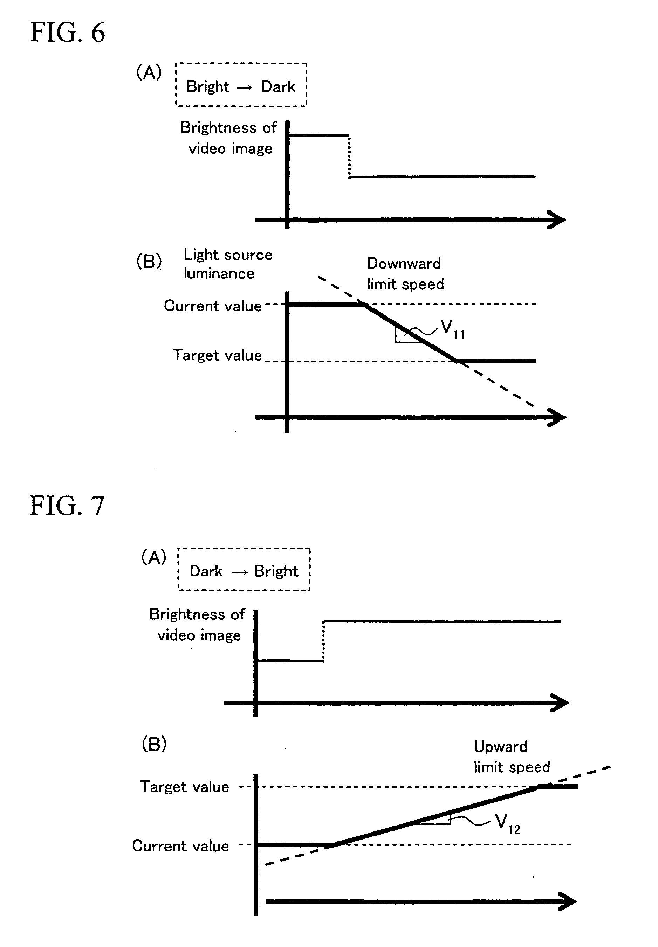

Figs. 6 and 7 are diagrams showing workings based on the abovementioned processing. Fig. 6 includes diagrams each showing workings when an image is darkened, and Fig. 7 includes diagrams each showing workings when an image is brightened. As shown in part (A) and (B) of Fig. 6, in a case where brightness of a video image is darkened at a certain point in time, the light source luminance is controlled so as to be decreased to the target value at a downward limit speed v11 from a current position. Fig. 7 includes diagrams each showing how the image is adjusted from a darker to a brighter state. In this case, the light source luminance is controlled at the upward limit speed v12 in the course of reaching the target value from a current value. In Figs. 6 and 7, v11 and v 12 denote the respective limit speeds, or speeds close to and less than the respective limit speeds. Note that, since the luminance is controlled at a faster speed in a case of downward change and at a slower speed in a case of upward change, this control has the advantage of enabling enhancement in electronic power saving effect while maintaining apparent brightness. Note that the inventor and others has experimentally made calculations, whose results indicate that, for example, values in a range of 3.5 to 7 % per second can be set as suitable values for v11 and v12 when a maximum luminance of the light source is set to 100 %.

Next, an image displaying technique according to a first embodiment of the present invention will be described with reference to the drawings. Basic configurations are the same. In the first embodiment, the technique is characterized in that control is performed in the following manner. While a speed (base following speed) obtained by dividing a difference between a current luminance and a target luminance by a certain time period is provided, a limit speed and the base following speed are compared to each other to select faster one (in downward change) or slower one (in upward change) of these speeds. This control focuses on a change in a video image when the video image is darkened to a large degree. Therefore, flicker is made ignorable even with a luminance being lowered to a large degree. Additionally, the control is based on an idea that, when a video image is slowly becoming brighter, increase of the luminance is unnecessary regardless of presence or absence of flicker.

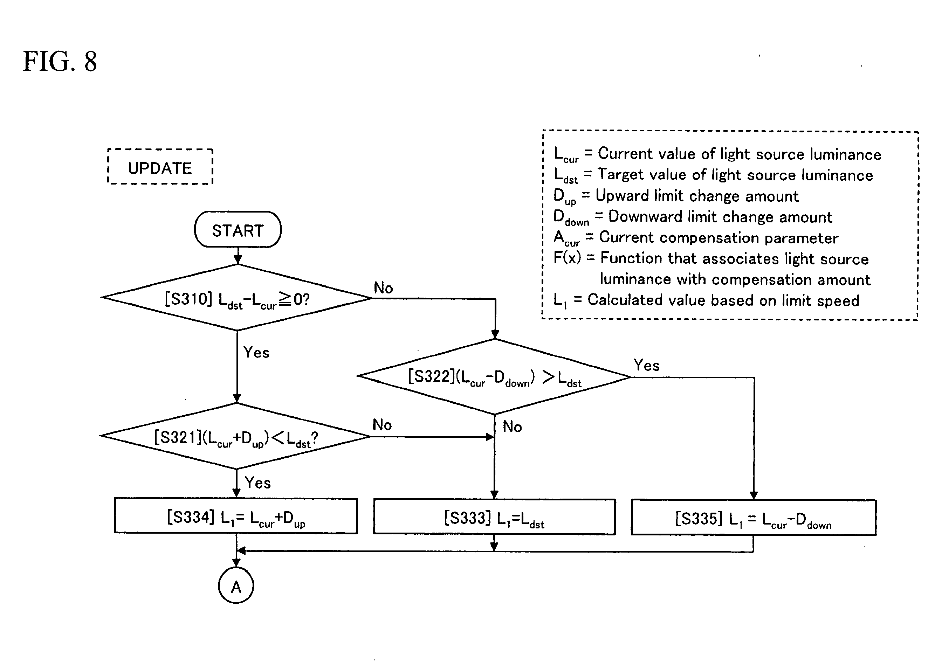

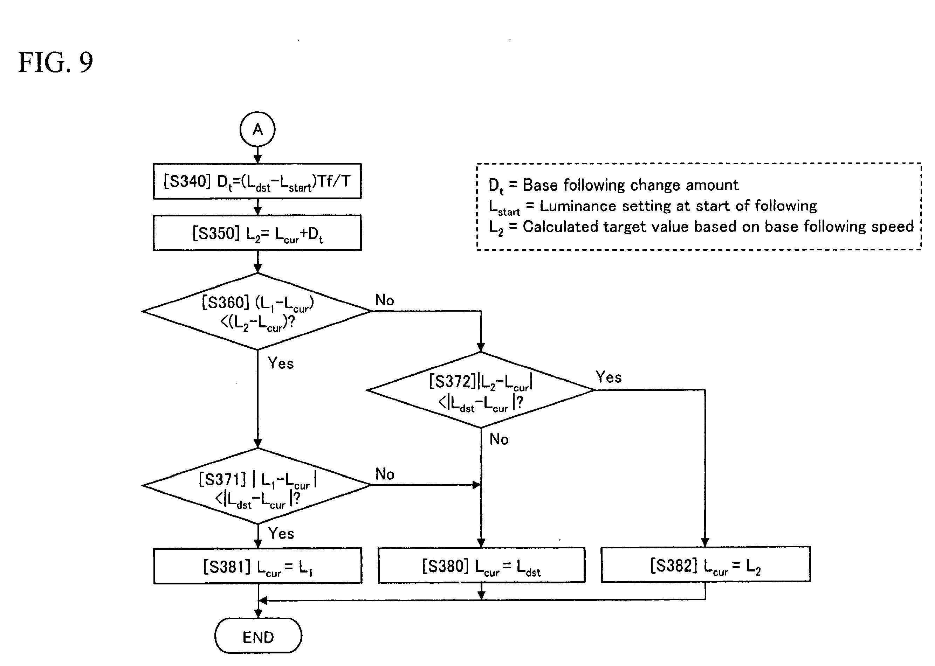

Fig. 8 is a flowchart diagram showing a flow of update processing according to this embodiment, and is a diagram corresponding to part (B) of Fig. 5. The main processing shown in part (A) of Fig. 5 is applicable also to this embodiment. Steps S310 to S322 in Fig. 8 are the same as those in part (B) of Fig. 5. What are different are S333 and later steps. In this embodiment, in the case of Yes in step S321, the control section proceeds to step S334, and finds L1 = a calculation value of the luminance based on a limit speed through an expression L1 = Lcur + Dup. In the case of No in step S321 or No in step S322, the control section proceeds to step S333, and finds L1 through L1 = Ldst. On the other hand, in the case of Yes in step S322, the control section proceeds to step S335, and finds L1 through L1 = Lcur -Ddown. Thus, in the first embodiment, the calculation value L1 of the luminance based on the limit speed is found in processing of finding the current value Lcur of the light source luminance. Subsequently, as shown in Fig. 9, in step 340, the control section finds a base following change amount Dt through Dt = (Ldst - Lstart)Tf/T by using the processing cycle Tf and a constant T specifying a time period from the start of the luminance control and to when the target luminance is reached. In step S350, the control section finds, through L2 = Lcur + Dt, a target value L2 calculated based on the base following speed. Subsequently, in step S360, the control section determines whether or not a value of (L1 - Lcur) is larger than a value of (L2 - Lcur). In other words, in a case of upward change, the control section selects one of these values that represents the smaller change, whereas, in a case of downward change, the control section selects one of these values that represents the larger change. In the case of Yes, L1 is selected, and the control section proceeds to step S371. In the case of No in step S360, L2 is selected, and the control section proceeds to step S372.

In step 371, the control section compares an absolute value of (L1 - Lcur) and an absolute value of (Ldst - Lcur) to each other. If the latter is larger (Yes), the control section sets Lcur = L1 in step 381 since it can be judged that the target value is not exceeded. If the former is larger (No), the control section proceeds to step S380 and sets Lcur = Ldst in step 380 since it can be judged that the target value is exceeded.

In step 372, the control section compares an absolute value of (L2 - Lcur) and the absolute value of (Ldst - Lcur) to each other. If the latter is larger (Yes), the control section sets Lcur = L2 in step 382. If the former is larger (No), the control section proceeds to step S380 and sets Lcur = Ldst in step 380.

As described above, the control section compares L1 and L2 in step S360 and then compares L1 to Ldst in step S371, thereby performing the control while selecting the faster change in a case of downward change (step S381), or selecting the slower change in a case of upward change (step S380). The same applies to step S372.

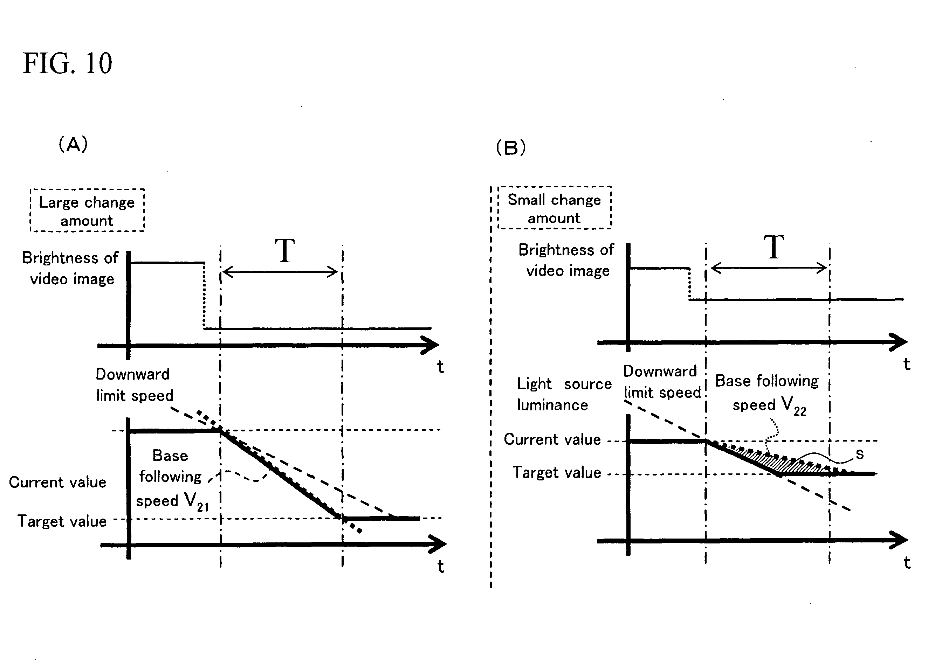

Fig. 10 includes diagrams each showing workings caused by the image displaying technique according to this embodiment. When a difference (a change) between the current value and the target value is not so large, a power saving effect is enhanced as compared to the general method (that uses base following speeds only). As shown in part (A) of Fig. 10, when a change of a video image is large, the control is performed on the basis of a base following speed v21, whereby a power saving effect as large as that obtained by the general method. On the other hand, as shown in part (B) Fig. 10, when a change in brightness of a video image is small, a power consumption reduction effect is increased by a portion (a portion of a shaded area S in the drawing) corresponding to a difference between a base following speed v22 and a downward limit speed.

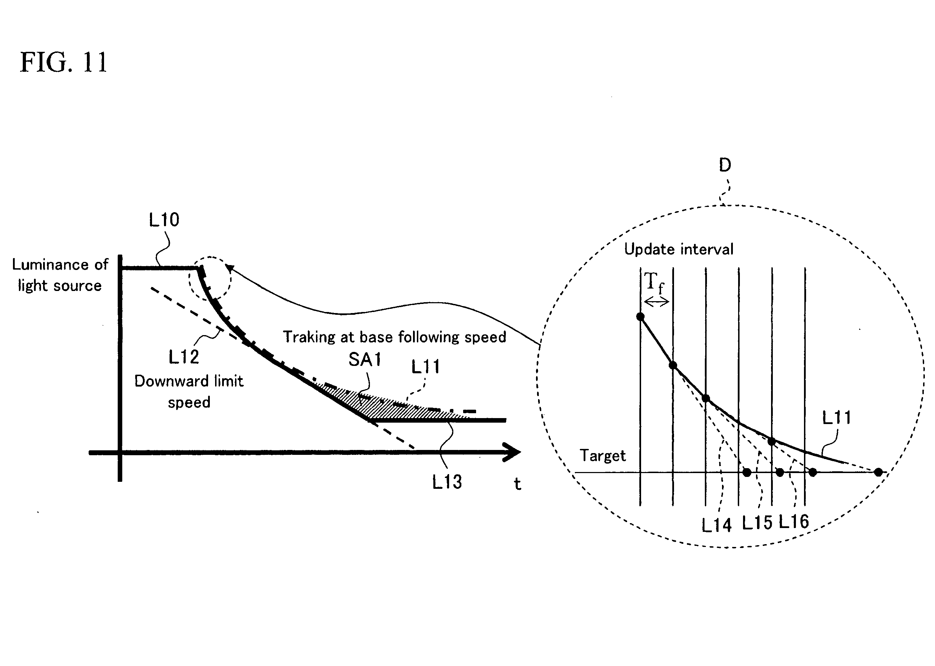

Next, an image displaying technique according to a second embodiment of the present invention will be described with reference to the drawings. Fig. 11 is a diagram showing an example of a pattern of base following speeds which is based on an idea different from that described above, and is a diagram showing a case of downward change, the way being different from that in the above. As shown in Fig. 11, values of a base following speed v (luminance/period), which is found on the basis of a time period and a luminance of a light source, are updated also during a following operation, and are shown by bold lines (L10, L11, L12 and L13) in Fig. 11. In this case, in control based on base following speeds, every time update processing is performed, control indicated by each of partial straight lines L14 to L16 is sequentially performed on the basis of a difference from a target luminance as shown in an enlarged view D in Fig. 11. As a result, the control as a whole is indicated by a dashed-dotted line in Fig. 11 (L11). The control method as described above has an advantage of being highly practicable because the method can more smoothly control the luminance of the light source. In another aspect, this embodiment has the following meaning. As shown in Fig. 11, in the case of downward change, through processing of selecting the faster one of a base following speed and a limit speed, the base following speed (indicated by the dashed-dotted line L11), which becomes slower and slower as in the asymptotic lines, is firmly forced to converge by use of the downward limit speed (indicated by a dashed line L12), whereby power saving can be achieved by a portion corresponding to an area indicated by SA1.

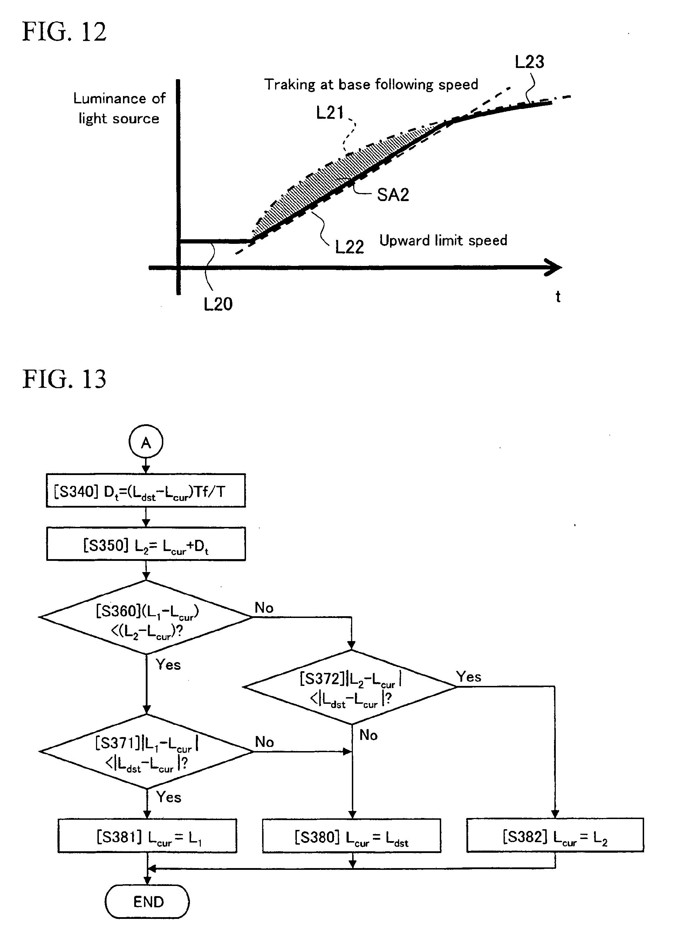

On the other hand, as shown in Fig. 12, in the case of upward change where the luminance of the light source is increased, following based on a base following speed poised to sharply rise as indicated by L21 is suppressed by an upward limit speed L22, whereby power saving can be achieved (by a portion corresponding to an area indicated by SA2) as indicated by L20, L 22 and L23.

Fig. 13 is a flowchart diagram showing a flow of image displaying processing according to this embodiment. Since processing until A, surrounded by an open circle, in Fig. 8 is the same as that of the first embodiment, only the following processing is shown in Fig. 13. First of all, the control section proceeds to S340 from any one of steps S333 to S335 in Fig. 8, and calculates the base following speed Dt through Dt = (Ldst - Lcur)Tf/T. A difference from step S340 shown in Fig. 8 is in that the base following speed Dt is determined on the basis of a current value of the light source luminance instead of a set luminance value Lstart of when the following is started. Subsequently, processing in S350 of finding the target value L2 calculated based on the base following speed through L2 = Lcur + Dt (as in the case of the first embodiment) and in subsequent steps S360 to S382 is the same as corresponding processing in the second embodiment shown in Fig. 9. In essence, points described by use of Figs. 11 and 12 are differences of the technique according to this embodiment from the technique according to the first embodiment.

Examples of the application of the image displaying techniques according to the above embodiments will be described below as examples.

### Examples

### Example 1

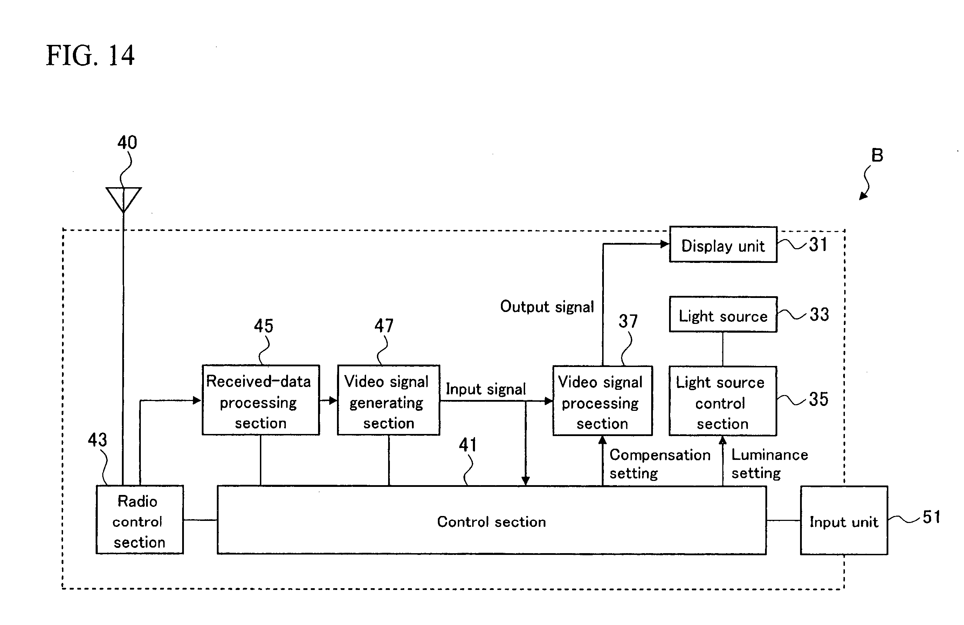

Fig. 14 is a diagram showing an example where the above image displaying techniques are applied to a mobile phone, and is a functional block diagram showing one configuration example of a mobile phone having a One-Seg audio-visual function. As shown in Fig. 14, a mobile phone B according to this example includes a display unit 31, a light source 33, a light source control section 35, a video signal processing section 37, an antenna 40, a control section 41 that controls an entirety of the mobile phone, a radio control section 43, a received-data processing section 45, a video signal generating section 47, and an input unit 51. This configuration is the same as a general mobile phone having a One-Seg reception function. However, an input signal from the video signal generating section 47 is inputted to both of the video signal processing section 37 and the control section 41, and a compensation setting outputted from the control section and the input signal are inputted to the video signal processing section 37. This configuration is the same as the configuration shown in Fig. 3. As control on the light source 33 and control on an output signal, control according to the first to third embodiments is performed. Employment of this configuration makes it possible, for example, in a case where One-Seg viewing is performed though the mobile phone, to prevent visual discomfort (such as flicker) from occurring when brightness of a video image is changed, and additionally, to suppress power consumption when a luminance of the light source is increased or lowered. In particular, contents of a video image frequently change in One-Seg viewing, and therefore, when such a change in the contents occurs, power saving and flicker suppression in the video image are enabled at the same time by controlling the light source and the video signals in the above manner. Additionally, a configuration may be employed where a power saving mode and a normal mode are switched by providing to the input unit 51 a switch or the like that switches a value of the limit speed. Also, a configuration may be employed where a switch for adjustment, by which levels of power saving are changed, is provided. Additionally, the above switching and adjustment may be made through menu operation using a GUI.

### Example 2

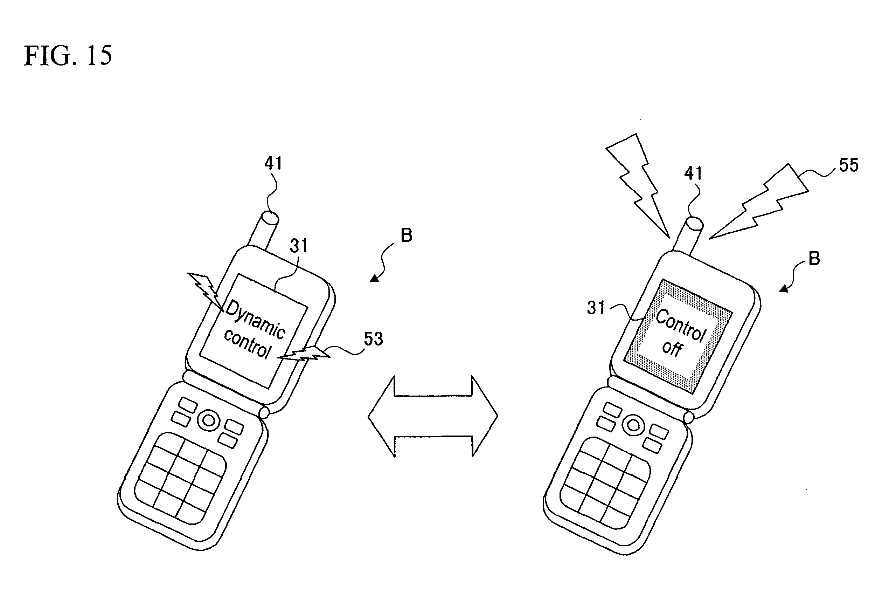

Fig. 15 is a view showing an example utilizing the mobile phone shown in Fig. 14. As shown in the left illustration, this example is configured with a focus on the fact that fluctuations in power, which are attributable to dynamic control on the light source in the display unit 31 according to this embodiment, can generate disturbance 53 to radio communications performed via the antenna 41 in the mobile phone B. Since occurrence of such disturbance is not preferable, as shown in the right illustration, there is provided a function of turning off the dynamic control of the display unit 31, that is, control based on the image displaying technique according to this embodiment, upon detecting an outgoing/incoming communication 55. Unlike in the case of television viewing, display in a radio communication is based on, for example, an e-mail, the Internet or the like. Such display does not need dynamic control so much as display in television reception and as reception of a recorded TV program. Consequently, in this example, there is included a function of turning off a function of the dynamic control when the necessity of dynamic control is low on the basis of a type of display, a type of a communication and the like,. Note that the dynamic control function may be automatically turned on/off upon detection of a type of display and a type of communication, or may be manually turned on/off.

### Example 3

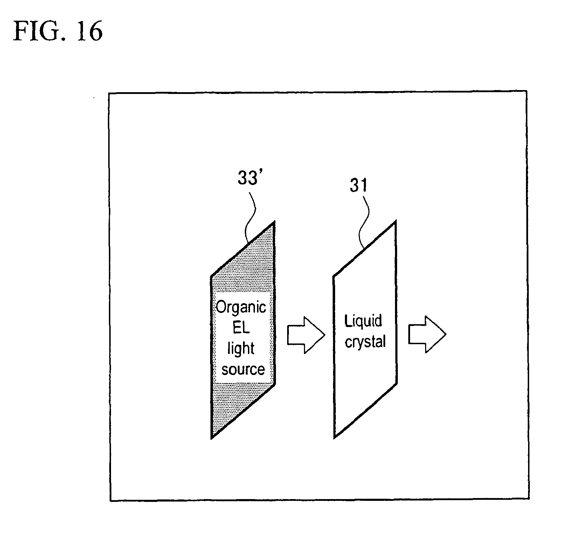

Next, with reference to Fig. 16, an example will be described where this image displaying technique is applied to a display unit using OLED (Organic Light Emitting Diode) as a light source. The display unit shown in Fig. 16 is a liquid crystal display unit using OLED as a light source. Basically, the display unit can be used as a display section of a mobile terminal. In a case of using OLED as a light source, a lifetime thereof is an issue, and lowering luminances is effective in prolonging the lifetime of the OLED.

If power saving control is performed on a light source of OLED in the above described manner, a lifetime of the light source can be prolonged. For example, if a peak luminance of the light source of the OLED is reduced by 10 %, a reliability period of a display panel can be improved by 10 %. As a matter of course, although LEDs or the like may alternatively be used for the light source, this technique is particularly effective in a case using OLED.

### Example 4

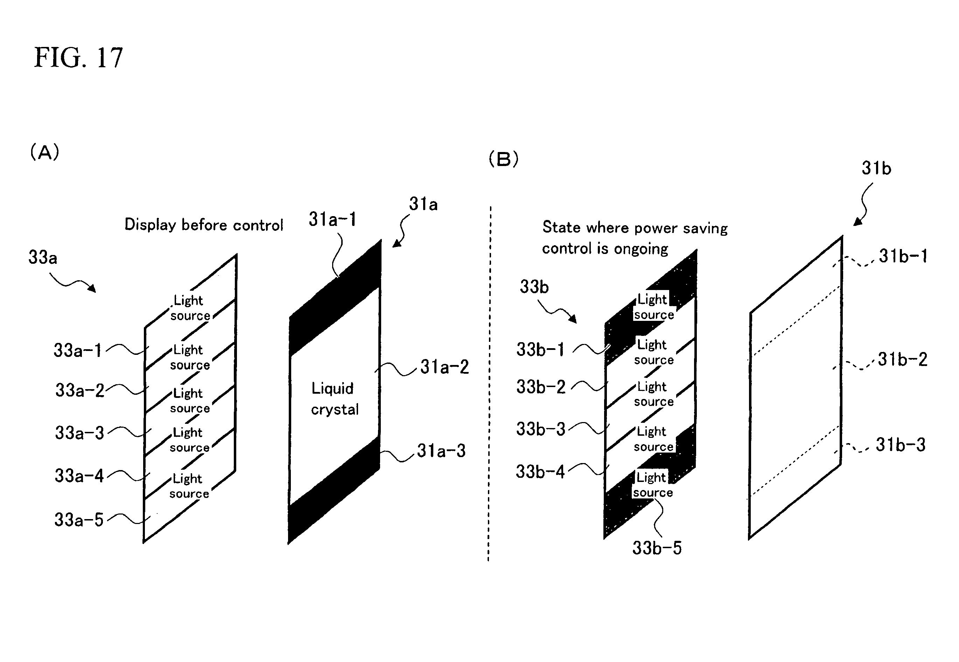

Next, a fourth example utilizing the display control technique according to this embodiment will be described with reference to Fig. 17. Fig. 17 includes views showing one configuration example of a liquid crystal display unit that has a configuration enabling area-by-area control over a light source luminance, as in a case where the display unit is formed of cold-cathode tubes or LED arrays. In this embodiment, with respect to a liquid crystal panel 31a, areas are independently controllably arranged, for example, as in the case of five light sources 33a-1 to 33a-5 corresponding to the respective areas, whereby each of the areas can be controlled by the display control technique according to this embodiment. Fig. 17(A) shows a state before control according to this embodiment is performed. Here, assume, for example, that a signal for displaying black belts 31a-1 and 31a-3 in two opposite edge areas is inputted. If control is performed in this state in accordance with the display control technique of this embodiment as shown in Fig. 17(B), luminances of light sources in two opposite edge areas can be lowered as indicated by 33b-1 and 33b-5. At this time, it is considered that video images displayed in the areas 31b-1 and 31 b-3 draw less attention than a video image displayed in an area 31b-2. Therefore, a power saving effect can be enhanced by controlling a limit speed at a faster speed (in a downward direction) or at a slower speed (in an upward direction). That is, the display unit is configured to enhance a power saving effect by having various limit speeds in accordance with areas and positions of light sources by the utilization of a visual characteristic where a change is less conspicuous in a case where a display area is small or is located at an edge area of a screen.

### Example 5

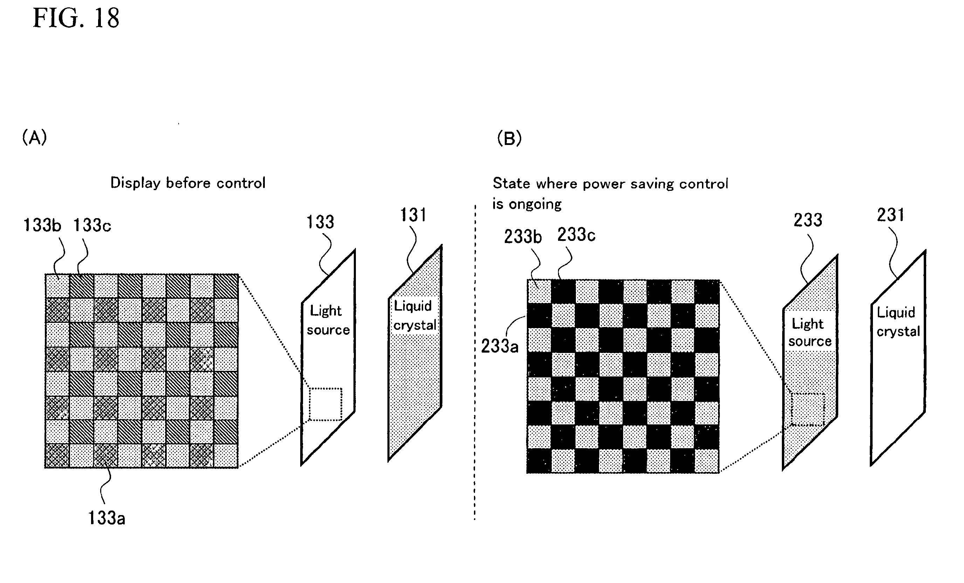

Next, an image displaying technique according to a fifth example will be described with reference to the drawing. An image display unit according to this example has a configuration where light sources are provided for each RGB component, and are formed of self-luminous light sources such as multiple LED arrays. A configuration shown in part (A) of Fig. 18 includes: a light source panel 133 including light sources (LED arrays) 133a to 133c for the respective RGB components; and a liquid crystal panel 131 arranged so as to face this panel. In such a configuration, when a video signal in which a particular color component (for example, the G component 133b) is large, luminances of the other components (233a and 233c) can be lowered as shown in part (B) of Fig. 18. The image display unit is configured to enhance a power saving effect by having various limit speeds for the respective color components (light sources 233a to c) at this time. In other words, control on a color less contributing to brightness, which is, for example, B, is performed at a faster speed (in a downward direction) or at a slower speed (in an upward direction). Thereby, further power saving can be achieved. Note that, since Y = 0.299R + 0.587G + 0.114B, R:G:B nearly equals 3:6:1 in terms of degree of contribution to a luminance.

As described above, the image displaying technique according to this embodiment has an advantage of achieving power saving in both of control on upward change and control on downward change. Note that, obviously, pixels based on complementary colors or the like may be used although the above embodiment has been described by taking RGB, which is based on the primary colors.

### Industrial Applicability

The present invention is applicable to image displays. Additionally, the present invention is applicable to audio-visual devices, such as mobile terminals and television reception units that utilize image displays.

## Claims

1. An image display (A) including a display panel (1, 31, 31b, 231) and a light source (3, 33, 33b, 233) that illuminates the display panel (1, 31, 31b, 231), the image display (A) comprising
a control section (11, 41) that, when a video image signal inputted to the image display (A) is displayed on the display panel and is controlled to attain targeted brightness of display, performs control to change a light source luminance and to set a speed of changing the light source luminance to be slower when the light source luminance is increased than when the light source luminance is decreased,
**characterized in that**
the control section is configured to compensate a decrease of the light source luminance by increasing the luminance of the video signal, and that the control section (11, 41) is configured to perform control by selecting the slower one of a base following speed obtained by dividing a difference between a target value and a current value of the light source luminance by a certain time period and a limit speed in upward change where the light source luminance is increased as the speed of changing the light source luminance, and by selecting the faster one thereof in downward change where the light source luminance is decreased as the speed of changing the light source luminance, wherein the limit speed is determined so as to cause no visual discomfort.

2. The image display (A) according to claim 1, **characterized in that** the control section (11, 41) updates a value of the base following speed while operating to approximate the current value of the light source luminance to the target value of the light source luminance.

3. The image display (A) according to claim 1, **characterized in that** the control section (11, 41) switches a value of the limit speed from one to another on the basis of the current value of the light source luminance.

4. The image display (A) according to claim 1, **characterized in that** the light source (3, 33, 33b, 233) allows different light source luminances to be used respectively for a plurality of areas constituting a display panel (1, 31, 31b, 231), and
the control section (11, 41) applies a changing speed of the light source luminance to one or more of the areas, the changing speed being different from the changing speed applied to the rest of the areas.

5. The image display (A) according to claim 4, **characterized in that**, in an area among the plurality of areas that is located at an edge of a screen, the control section (11, 41) decreases the light source luminance at a faster speed or increases the light source luminance at a slower speed than in the rest of the areas that is not located at the edge of the screen.

6. The image display (A) according to claim 4, **characterized in that**, in an area among the plurality of areas that has a smaller area, the control section (11, 41) decreases the light source luminance at a faster speed or increases the light source luminance at a slower speed than in another one of the areas that has a larger area.

7. The image display (A) according to claim 1, **characterized in that**
the light source (3, 33, 33b, 233) allows different light source luminances to be used respectively for color components, and
the control section (11, 41) changes the changing speed of the light source luminance value for each of the color components in accordance with a magnitude of change amount of a luminance value per unit change amount of the color component.

8. The image display (A) according to claim 7, **characterized in that**, for a color with a small magnitude of the change amount of a luminance value per unit change amount of the corresponding color component, the control section (11, 41) decreases the light source luminance at a faster speed or increases the light source luminance at a slower speed than in a color with larger magnitude.

9. The image display according to any one of the preceding claims, **characterized in that** the light source (3, 33, 33b, 233) is an OLED (Organic Light Emitting Diode) unit.

10. A mobile terminal (B) comprising:
the image display (A) according to any one of the preceding claims;
a communication section (40, 41); and
a video image receiving section, the mobile terminal (B) being **characterized in that**
the control section (41) performs the control with the changing speed of the light source luminance set constant for a video image acquired from the communication section, and performs the control with the changing speed of the luminance value set variable for a video image acquired from the video image receiving section.

11. The mobile terminal (B) according to claim 10, **characterized in that**, upon detection of operation of the communication section (40, 41), the control performed with the changing speed of the light source luminance set variable is halted.

12. A display control method in an image display (A) including a display panel (1, 31, 31b, 231) and a light source (3, 33, 33b, 233) that illuminates the display panel (1, 31, 31b, 231), the display control method comprising the step of
when performing control to attain targeted brightness of display, performing control to change the light source luminance, and also to set a changing speed of the light source luminance to be slower when the luminance is increased than when the luminance is decreased,
**characterized in that**
control is performed to compensate a decrease of the light source luminance by increasing the luminance of the video signal, and that control is performed by selecting the slower one of a base following speed obtained by dividing a difference between a target value and a current value of the light source luminance by a certain time period and a limit speed in upward change where the light source luminance is increased as the speed of changing the light source luminance, and by selecting the faster one thereof in downward change where the light source luminance is decreased as the speed of changing the light source luminance, wherein the limit speed is determined so as to cause no visual discomfort.

13. A program for causing a computer to execute the display control method according to claim 12.

## Patentansprüche

1. Bildanzeige (A),
mit einer Anzeigetafel (1, 31, 31b, 231) und einer Lichtquelle (3, 33, 33b, 233), welche die Anzeigetafel (1, 31, 31b, 231) beleuchtet,
wobei die Bildanzeige (A) einen Steuerbereich (11, 41) aufweist, welcher, wenn ein Videobildsignal, welches der Bildanzeige (A) zugeführt wird, auf der Anzeigetafel angezeigt und gesteuert wird, um eine Zielhelligkeit der Anzeige zu erreichen, eine Steuerung durchführt, um eine Lichtquellenhelligkeit zu ändern und eine Änderungsgeschwindigkeit der Lichtquellenhelligkeit so einzustellen, um langsamer zu sein, wenn die Lichtquellenhelligkeit gesteigert wird, als wenn die Lichtquellenhelligkeit abgesenkt wird,
**dadurch gekennzeichnet,**
**dass** der Steuerbereich ausgebildet ist, ein Absenken der Lichtquellenhelligkeit durch Steigern der Helligkeit des Videosignals zu kompensieren, und
**dass** der Steuerbereich (11, 41) ausgebildet ist, eine Steuerung auszuführen durch Auswählen der Langsameren einer einer Basis folgenden Geschwindigkeit, die erhalten wird durch Dividieren einer Differenz zwischen einem Zielwert und einem aktuellen Wert der Lichtquellenhelligkeit durch eine bestimmte Zeitspanne, und einer Grenzgeschwindigkeit bei einer aufwärts gerichteten Änderung, wo die Lichtquellenhelligkeit gesteigert wird, als die Änderungsgeschwindigkeit der Lichtquellenhelligkeit, und durch Auswählen der Schnelleren davon bei einer abwärts gerichteten Änderung, wo die Lichtquellenhelligkeit abgesenkt wird, als Änderungsgeschwindigkeit der Lichtquellenhelligkeit, wobei die Grenzgeschwindigkeit so bestimmt wird, dass keine visuelle Unannehmlichkeit auftritt.

2. Bildanzeige (A) nach Anspruch 1,
**dadurch gekennzeichnet,**
**dass** der Steuerbereich (11, 41) einen Wert der der Basis folgenden Geschwindigkeit während eines Betriebs zum Approximieren des aktuellen Werts der Lichtquellenhelligkeit zum Zielwert der Lichtquellenhelligkeit aktualisiert.

3. Bildanzeige (A) nach Anspruch 1,
**dadurch gekennzeichnet,**
**dass** der Steuerbereich (11, 41) einen Wert der Grenzgeschwindigkeit von einem zu einem anderen auf der Grundlage des aktuellen Werts der Lichtquellenhelligkeit schaltet.

4. Bildanzeige (A) nach Anspruch 1,
**dadurch gekennzeichnet,**
**dass** die Lichtquelle (3, 33, 33b, 233) unterschiedliche Lichtquellenhelligkeiten zur jeweiligen Verwendung für eine Mehrzahl von Bereichen erlaubt, die eine Anzeigetafel (1, 31, 31b, 231) bilden, und
**dass** der Steuerbereich (11, 41) eine Änderungsgeschwindigkeit der Lichtquellenhelligkeit einem oder mehreren Bereichen aufprägt, wobei die Änderungsgeschwindigkeit unterschiedlich ist zu der Änderungsgeschwindigkeit, die dem Rest der Bereiche aufgeprägt wird.

5. Bildanzeige (A) nach Anspruch 4,
**dadurch gekennzeichnet,**
**dass** bei einem Bereich unter der Mehrzahl von Bereichen, welcher an einer Kante eines Anzeigeschirms angeordnet ist, der Steuerbereich (11, 41) die Lichtquellenhelligkeit mit einer schnelleren Geschwindigkeit absenkt oder die Lichtquellenhelligkeit mit einer langsameren Geschwindigkeit steigert als beim Rest der Bereiche, der nicht an der Kante des Anzeigeschirms angeordnet ist.

6. Bildanzeige (A) nach Anspruch 4,
**dadurch gekennzeichnet,**
**dass** in einem Bereich unter der Mehrzahl von Bereichen, der eine geringere Fläche aufweist, der Steuerbereich (11, 41) die Lichtquellenhelligkeit mit einer schnelleren Geschwindigkeit absenkt oder die Lichtquellenhelligkeit mit einer langsameren Geschwindigkeit steigert als in einem anderen der Bereiche, welcher eine größere Fläche besitzt.

7. Bildanzeige (A) nach Anspruch 1,
**dadurch gekennzeichnet,**
**dass** die Lichtquelle (3, 33, 33b, 233) unterschiedliche Lichtquellenhelligkeiten zur jeweiligen Verwendung für Farbkomponenten erlaubt und
**dass** der Steuerbereich (11, 41) die Änderungsgeschwindigkeit des Lichtquellenhelligkeitswerts für jede der Farbkomponenten gemäß einem Grad eines Änderungswerts eines Helligkeitswerts pro Einheitsänderungswert der Farbkomponente ändert.

8. Bildanzeige (A) nach Anspruch 7,
**dadurch gekennzeichnet,**
**dass** für eine Farbe mit einem geringen Grad des Änderungswerts für einen Helligkeitswert pro Einheitsänderungswert der korrespondierenden Farbkomponente der Steuerbereich (11, 41) die Lichtquellenhelligkeit mit einer schnelleren Geschwindigkeit absenkt oder die Lichtquellenhelligkeit mit einer langsameren Geschwindigkeit steigert als bei einer Farbe mit höheren Grad.

9. Bildanzeige (A) nach einem der vorangehenden Ansprüche,
**dadurch gekennzeichnet,**
**dass** die Lichtquelle (3, 33, 33b, 233) eine OLED-Einheit (organische Licht emittierende Diode) ist.

10. Mobiles Endgerät (B),
mit:
der Bildanzeige (A) nach einem der vorangehenden Ansprüche,
einem Kommunikationsbereich (40, 41) und
einem Videobildempfangsbereich,
wobei das mobile Endgerät (B) **dadurch gekennzeichnet ist,**
**dass** der Steuerbereich (41) die Steuerung für ein vom Kommunikationsbereich erfasstes Videobild mit der Änderungsgeschwindigkeit der Lichtquellenhelligkeit konstant eingestellt ausführt und die Steuerung für ein vom Videobildempfangsbereich erfasstes Videobild mit der Änderungsgeschwindigkeit des Helligkeitswerts variabel eingestellt ausführt.

11. Mobiles Endgerät (B) nach Anspruch 10,
**dadurch gekennzeichnet,**
**dass** auf die Detektion eines Betriebs des Kommunikationsbereichs (40, 41) hin die Steuerung, welche mit einer variabel eingestellten Änderungsgeschwindigkeit der Lichtquellenhelligkeit ausgeführt wird, gestoppt wird.

12. Anzeigesteuerverfahren bei einer Bildanzeige (A), welche eine Anzeigetafel (1, 31, 31b, 231) und eine Lichtquelle (3, 33, 33b, 233) aufweist, welche die Anzeigetafel (1, 31, 31b, 231) beleuchtet,
wobei das Steuerverfahren, wenn die Steuerung ausgeführt wird zum Erreichen einer vorbestimmten Helligkeit der Anzeige, den Schritt aufweist des Ausführens einer Steuerung zum Ändern der Lichtquellenhelligkeit und ebenso zum Einstellen einer Änderungsgeschwindigkeit der Lichtquellenhelligkeit, damit diese langsamer ist, wenn die Helligkeit gesteigert wird, als wenn die Helligkeit abgesenkt wird,
**dadurch gekennzeichnet,**
**dass** die Steuerung ausgeführt wird, ein Absinken der Lichtquellenhelligkeit durch Steigern der Helligkeit des Videosignals zu kompensieren, und
**dass** die Steuerung ausgeführt wird durch Auswählen der Langsameren einer einer Basis folgenden Geschwindigkeit, die erhalten wird durch Dividieren einer Differenz zwischen einem Zielwert und einem aktuellen Wert der Lichtquellenhelligkeit durch eine bestimmte Zeitspanne, und einer Grenzgeschwindigkeit bei einer aufwärts gerichteten Änderung, wo die Lichtquellenhelligkeit gesteigert wird, als die Änderungsgeschwindigkeit der Lichtquellenhelligkeit, und durch Auswählen der Schnelleren davon bei einer abwärts gerichteten Änderung, wo die Lichtquellenhelligkeit abgesenkt wird, als Änderungsgeschwindigkeit der Lichtquellenhelligkeit, wobei die Grenzgeschwindigkeit so bestimmt wird, dass keine visuelle Unannehmlichkeit auftritt.

13. Programm zum Bewirken, dass ein Computer das Anzeigesteuerverfahren nach Anspruch 12 ausführt.

## Revendications

1. Afficheur d'image (A) comprenant un panneau d'affichage (1, 31, 31b, 231) et une source lumineuse (3, 33, 33b, 233) qui éclaire le panneau d'affichage (1, 31, 31b, 231), l'afficheur d'image (A) comprenant
une section de commande (11, 41) qui, quand un signal d'image vidéo entré dans l'afficheur d'image (A) s'affiche sur le panneau d'affichage et est commandé pour atteindre la luminosité visée de l'affichage, opère une commande pour modifier une luminance de source lumineuse et pour régler une vitesse de modification de la luminance de source lumineuse pour qu'elle soit plus lente quand la luminance de source lumineuse est augmentée que quand la luminance de source lumineuse est réduite,
**caractérisé en ce que**
la section de commande est conçue pour compenser une réduction de la luminance de source lumineuse en augmentant la luminance du signal vidéo, et **en ce que** la section de commande (11, 41) est conçue pour opérer une commande en sélectionnant comme vitesse de modification de la luminance de source lumineuse la vitesse la plus lente parmi une vitesse de suivi de base obtenue en divisant une différence entre une valeur cible et une valeur présente de la luminance de source lumineuse par une certaine durée, et une vitesse limite, lors d'une modification vers le haut où la luminance de source lumineuse est augmentée, et en sélectionnant comme vitesse de modification de la luminance de source lumineuse la plus rapide de ces vitesses, lors d'une modification vers le bas où la luminance de source lumineuse est réduite comme vitesse de modification de luminance de source lumineuse, étant précisé que la vitesse limite est déterminée de manière à ne pas provoquer de gêne visuelle.

2. Afficheur d'image (A) selon la revendication 1, **caractérisé en ce que** la section de commande (11, 41) actualise une valeur de la vitesse de suivi de base tout en opérant pour rapprocher la valeur présente de la luminance de source lumineuse de la valeur cible de la luminance de source lumineuse.

3. Afficheur d'image (A) selon la revendication 1, **caractérisé en ce que** la section de commande (11, 41) passe d'une valeur de vitesse limite à l'autre sur la base de la valeur présente de la luminance de source lumineuse.

4. Afficheur d'image (A) selon la revendication 1, **caractérisé en ce que** la source lumineuse (3, 33, 33b, 233) permet à différentes luminances de source lumineuse d'être utilisées respectivement pour plusieurs zones qui constituent un panneau d'affichage (1, 31, 31b, 231), et
la section de commande (11, 41) applique une vitesse de modification de la luminance de source lumineuse à l'une au moins des zones, la vitesse de modification étant différente de la vitesse de modification appliquée au reste des zones.

5. Afficheur d'image (A) selon la revendication 4, **caractérisé en ce que** dans une zone, parmi les différentes zones, qui se trouve sur un bord d'un écran, la section de commande (11, 41) réduit la luminance de source lumineuse à une vitesse plus rapide ou augmente la luminance de source lumineuse à une vitesse plus lente que dans le reste des zones qui n'est pas situé sur le bord de l'écran.

6. Afficheur d'image (A) selon la revendication 4, **caractérisé en ce que** dans une zone, parmi les différentes zones, qui présente une plus petite surface, la section de commande (11, 41) réduit la luminance de source lumineuse à une vitesse plus rapide ou augmente la luminance de source lumineuse à une vitesse plus lente que dans une autre desdites zones qui présente une plus grande surface.

7. Afficheur d'image (A) selon la revendication 1, **caractérisé en ce que**
la source lumineuse (3, 33, 33b, 233) permet à différentes luminances de source lumineuse d'être utilisées respectivement pour des composants de couleur, et
la section de commande (11, 41) modifie la vitesse de modification de la valeur de luminance de source lumineuse pour chacun des composants de couleur selon une grandeur de degré de modification d'une valeur de luminance par unité de degré de modification du composant de couleur.

8. Afficheur d'image (A) selon la revendication 7, **caractérisé en ce que** pour une couleur avec une faible grandeur du degré de modification d'une valeur de luminance par unité de degré de modification du composant de couleur correspondant, la section de commande (11, 41) réduit la luminance de source lumineuse à une vitesse plus rapide ou augmente la luminance de source lumineuse à une vitesse plus lente que dans une couleur avec une grandeur plus grande.

9. Afficheur d'image (A) selon l'une quelconque des revendications précédentes, **caractérisé en ce que** la source lumineuse (3, 33, 33b, 233) est une unité OLED (diode électroluminescente organique).

10. Terminal mobile (B) comprenant :
l'afficheur d'image (A) selon l'une quelconque des revendications précédentes ;
une section de communication (40, 41) ; et
une section de réception d'image vidéo, le terminal mobile (B) étant **caractérisé en ce que**
la section de commande (41) opère la commande avec la vitesse de modification de la luminance de source lumineuse réglée constante pour une image vidéo acquise à partir de la section de communication, et opère la commande avec la vitesse de modification de la valeur de luminance fixée variable pour une image vidéo acquise à partir de la section de réception d'image vidéo.

11. Terminal mobile (B) selon la revendication 10, **caractérisé en ce que** lors de la détection du fonctionnement de la section de communication (40, 41), la commande opérée avec la vitesse de modification de la luminance de source lumineuse fixée variable est arrêtée.

12. Procédé de commande d'affichage dans un afficheur d'image (A) comprenant un panneau d'affichage (1, 31, 31b, 231) et une source lumineuse (3, 33, 33b, 233) qui éclaire le panneau d'affichage (1, 31, 31b, 231), le procédé de commande d'affichage comprenant l'étape qui consiste,
lors de la commande pour obtenir la luminosité visée de l'affichage, à opérer une commande pour modifier la luminance de source lumineuse, et aussi pour régler une vitesse de modification de la luminance de source lumineuse pour qu'elle soit plus lente quand la luminance est augmentée que quand la luminance est réduite,
**caractérisé en ce**
**qu'**une commande est opérée pour compenser une réduction de la luminance de source lumineuse en augmentant la luminance du signal vidéo, et en ce qu'une commande est opérée en sélectionnant comme vitesse de modification de la luminance de source lumineuse la vitesse la plus lente parmi une vitesse de suivi de base obtenue en divisant une différence entre une valeur cible et une valeur présente de la luminance de source lumineuse par une certaine durée, et une vitesse limite lors d'une modification vers le haut où la luminance de source lumineuse est augmentée, et en sélectionnant comme vitesse de modification de la luminance de source lumineuse la plus rapide de ces vitesses lors d'une modification vers le bas où la luminance de source lumineuse est réduite, étant précisé que la vitesse limite est déterminée de manière à ne pas provoquer de gêne visuelle.

13. Programme pour amener un ordinateur à exécuter le procédé de commande d'affichage selon la revendication 12.
